# EUROPÄISCHE PATENTSCHRIFT

(11) **EP 3 899 303 B1**
(45) Veröffentlichungstag und Bekanntmachung des Hinweises auf die Patenterteilung: **29.11.2023**
(21) Anmeldenummer: 19829494.4
(22) Anmeldetag: 17.12.2019
(51) Int. Cl.: F16D 51/20, B60T 13/74, F16D 51/18, F16D 66/00

(54) **TROMMELBREMSE**
DRUM BRAKE
FREIN À TAMBOUR

(30) Priorität: 18.12.2018 DE 102018222125
(43) Veröffentlichungstag der Anmeldung: 27.10.2021
(73) Patentinhaber: Continental Automotive Technologies GmbH, 30165 Hannover (DE)
(72) Erfinder: BACH, Uwe, 60488 Frankfurt am Main (DE); VEY, Christian, 60488 Frankfurt am Main (DE); SEFO, Ahmed, 60488 Frankfurt am Main (DE); HOFFMANN, Jens, 60488 Frankfurt am Main (DE)
(74) Vertreter: Continental Corporation
(86) Internationale Anmeldenummer: PCT/EP2019/085535
(87) Internationale Veröffentlichungsnummer: WO 2020/127189

(56) Entgegenhaltungen:
- WO-A2-2009/044908
- DE-A1-102013 224 922

## Beschreibung

Die Erfindung bezieht sich auf eine Trommelbremse der Servobremsbauart mit einer Bremstrommel und zwei an die Bremstrommel anlegbare, auf der Bremsbackenseite einer Trägerplatte angeordnete Bremsbacken, die je-weils ein Druckende und ein Abstützende aufweisen, wobei sich zwischen den Druckenden eine gegenüber der Trägerplatte schwimmend gelagerte Spreizeineinrichtung befindet, die zur Krafteinleitung in die beiden Druckenden in Krafteinleitungspunkten an den Druckenden abgestützt ist, und wobei sich zwischen den Abstützenden ein gegenüber der Trägerplatte schwimmend gelagerter Stempel befindet, der zur Kraftübertragung an den beiden Abstützenden abgestützt ist.

Eine elektrisch betätigbare Trommelbremse dieser Art, bei der die Spreizeinrichtung aus einem elektrischen Aktuator besteht, wird in der WO 99/53214 A1 beschrieben.

Um bei einer Bremsbetätigung den Aktuator steuern bzw. regeln zu können, werden Informationen über die Stärke der in der Trommelbremse wirkenden Kräfte benötigt. Gemäß der WO 99/53214 A1 wird an einer Stirnseite des Widerlagers ein Lastsensor angeordnet, der die Kraft misst, mit der sich eine der Bremsbacken an dem Widerlager abstützt.

Diese Information ist aber zur Steuerung bzw. Regelung des elektrischen Aktuators nicht genau genug, da bei einer Bremsbetätigung die auf die Bremsbacken wirkenden Reibkräfte unterschiedlich sein können, so dass auch die von den Reibkräften beeinflussten Abstützkräfte für jede Bremsbacke unterschiedlich sein werden. Die Abstützkraft einer Bremsbacke gibt daher nicht genau die Gesamtstärke der in der Trommelbremse wirkenden Kräfte und Bremsmomente wieder.

Die DE 10 2013 224 922 A1 betrifft eine Kraftfahrzeugtrommelbremse deren erklärte Aufgabe darin besteht, eine effiziente Variantenbildung in Hinblick auf hydraulisch oder alternativ elektrisch betätigbare Trommelbremsen zwecks Darstellung eines einfachen Produktbaukastens anzubieten. Dabei ist Sensorik einer Spreizeinrichtung zugeordnet. Zur Abstützung von Abstützenden von Bremsschuhen definiert die D 1 eine konventionelle Abstützung mit starrem Widerlager 15 in fixierter Lagerung an einer Bremsankerplatte 2.

Die WO 2009/0044908 A2 beschreibt mit deren Fig. 3 eine Kraftfahrzeugtrommelbremse deren Bremsschuhe 76a,76b an einem Druckende mit einer Spreizvorrichtung 50 gekoppelt sind. Ein "anchor member 36" der WO 2009/0044908 A2 kann mitnichten als ein elastisch verformbares Widerlager angesehen werden. Kontaktkräfte sind ohne jede Widerlagerdeformation anhand der Sensoren 94,96 aufgenommen, indem die Sensoren 94,96 Drehlagerkräfte aufnehmen.

Die Erfindung beruht daher auf der Aufgabe, eine Trommelbremse mit einer Lastmesseinrichtung am Widerlager zu schaffen, die die Gesamtstärke der in der Trommelbremse wirkenden Kräfte bei einer Bremsbetätigung wiedergibt.

Zur Lösung der Aufgabe wird vorgeschlagen, dass jede Bremsbacke an ihrem Druckende neben dem dortigen Krafteinleitungspunkt einen Druckkopf aufweist, wobei beide Druckköpfe an einem zwischen ihnen angeordneten und mit der Trägerplatte verbundenen Widerlager abgestützt sind, und dass das Widerlager als Ganzes als ein unter Last elastisch verformbares massives Bauteil ausgeführt ist, und dass ein oder mehrere Sensoren vorgesehen sind, die die sich unter Last einstellende Verformung des Widerlagers erfassen, wobei mittels des Sensorsignals das in der Trommelbremse erzeugte Bremsmoment bestimmt wird. Diese Ausgestaltung des Widerlagers macht es möglich, die Bremskräfte in einer Trommelbremse der Servobremsbauart zu bestimmen.

Um die Verformung des Widerlagers zu bestimmen, können Dehnmessstreifen eingesetzt werden, die auf das Widerlager aufgebracht werden.

Um eine deutliche Verformung zu erreichen, ist das Widerlager vorzugsweise von einer Basis gebildet, die über einen Steg an einen mit der Trägerplatte fest verbundenen Sockel anschließt, wobei die Druckköpfe an den gegenüberliegenden Kanten der Basis anliegen. Bei einer Belastung der Basis verschiebt sich oder kippt die Basis gegenüber dem Sockel, was messtechnisch erfasst werden kann.

In einer ersten einfachen Ausführung ist die Basis über einen zentralen Steg mit dem Sockel verbunden, wobei die einander zugewandten Kanten von Basis und Sockel parallel zueinander verlaufen und zwischen einander einen Messspalt einschließen. Die Größe des Messspaltes ändert sich, wenn die Basis gegenüber dem Sockel bewegt wird. Die Änderung der Größe des Messspaltes kann messtechnisch erfasst werden.

Eine andere Ausführung sieht vor, dass das Widerlager eine U-förmige Gestalt hat mit einer Basis und zwei von der Basis abstehende Arme, an deren Außenseite die Widerlagerenden der Bremsbacken abgestützt sind, wobei der oder die Sensoren von der Art sind, mit der sich die unter der Last verändernde Neigung der Arme erfasst wrrd.

Dazu wird die Basis von einem an der Trägerplatte befestigten Sockel ausgehenden zentralen Steg getragen, der an die Innenkante der Basis anschließt, so dass die Arme zur Trägerplatte gerichtet sind.

Um auch bei dieser Ausführung einen Messspalt zu bilden, sieht die Erfindung vor, dass seitlich vom zentralen Steg abstehende Stifte an die Innenkanten der Arme unter Bildung eines Messspaltes heranreichen.

Eine weitere Ausführung des Widerlagers sieht vor, dass die Basis und der Sockel über zwei randständige Streben miteinander zu einem Rahmen verbunden sind, wobei wenigstens ein Stift ausgehend vom Sockel zur Innenkante der Basis zur Bildung eines Messspaltes reicht.

Bei einer einseitigen Belastung wird der rechteckige Rahmen zu einem Parallelogramm verbogen, so dass die Messspalte proportional verkleinert werden. Zur Vergrößerung der Messgenauigkeit werden vorzugsweise der Sockel, die Stege und die Basis als ein einstückiges Bauteil ausgebildet.

Wie schon oben ausgeführt, kann die Messung der Verformung des Widerlagers mit Hilfe von Dehnmessstreifen erfolgen.

Der Bestimmung der Messspaltgröße dienen z. B. Hallsensoren oder auf dem anisotropen magnetoresistiven Effekt beruhende AMR-Sensoren . Auf dieser Grundlage können die Schenkel mit Magneten versehen sind, welche als (Signal)Geber für Hallsensor bzw. AMR-Sensor fungieren.

Im Folgenden soll anhand von drei Ausführungsbeispielen die Erfindung näher erläutert werden. Dazu zeigen:
- Fig. 1: eine Bremstrommel mit einer ersten Ausführung des Widerlagers,
- Fig. 2: eine vergrößerte Darstellung des Widerlagers der Trommelbremse nach Fig. 1,
- Fig. 3: eine vergrößerte Darstellung einer zweiten Ausführung des Widerlagers und
- Fig. 4: eine vergrößerte Darstellung einer dritten Ausführung des Widerlagers.

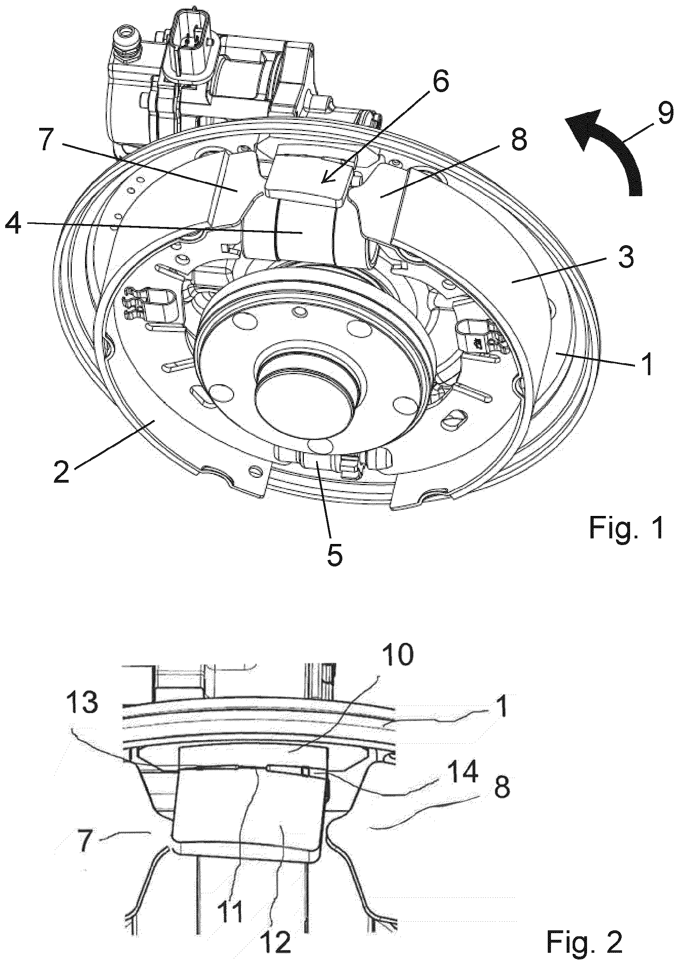

Fig. 1 zeigt in einer perspektivischen Ansicht eine Trommelbremse eines Kraftfahrzeuges, die aus einer kreisförmigen Trägerplatte 1 und zwei Bremsbacken 2 und 3 besteht, die konzentrisch zur Mittelachse der Trägerplatte 1 angeordnet sind.

Die Bremsbacken 2, 3 werden von einer hier nicht dargestellten Bremstrommel konzentrisch umgeben, die mit einem abzubremsenden Rad des Kraftfahrzeuges verbunden ist, so dass - wenn die Bremsbacken 2, 3 gegen diese Bremstrommel gedrückt werden - das sich drehende Rad verzögert (Betriebsbremsung) bzw. ein ruhendes Rad am Drehen gehindert wird (Feststellbremsung).

Die Bremsbacken 2, 3 besitzen jeweils ein Druckende und ein Abstützende, wobei zwischen den sich gegenüberliegenden Druckenden eine Spreizeinrichtung 4 angeordnet ist. Hierbei handelt es sich in der Regel um eine hydraulisch, elektromechanisch oder elektrohydraulisch betätigbare Einrichtung.

Zwischen den sich ebenfalls gegenüberliegenden Abstützenden befindet sich ein Stempel 5, der Kräfte von der einen zur anderen Bremsbacke überträgt.

Sowohl die Spreizeinrichtung 4 als auch der Stempel 5 sind gegenüber der Trägerplatte 1 in Umfangsrichtung schwimmend gelagert, so dass es sich um eine so genannte Duoservobremse handelt, die einen starken Selbstverstärkungseffekt aufweist.

Um die Bremskräfte, die als Reibungskräfte zwischen den Bremsbacken 2, 3 und der Bremstrommel wirken, abzustützen, ist ein Widerlager 6 vorgesehen. Dieses befindet sich radial außerhalb der Spreizeinrichtung 4, wobei sich an den Enden der Bremsbacken 2, 3 neben den Krafteinleitungspunkten der Spreizeinrichtung 4 noch Druckköpfe 7, 8 befinden, die an beiden Seiten des Widerlagers 6 abgestützt sind. Da sowohl die Spreizeinrichtung 4 als auch der Stempel 5 schwimmend gelagert sind, wird die Bremskraft jeweils nur von der ablaufenden Bremsbacke auf das Widerlager 6 übertragen.

Betrachtet man den Fall, dass die Bremstrommel sich gemäß dem dargestellten Pfeil 9 gegen den Uhrzeigersinn dreht, so ist die links dargestellte Bremsbacke 2 die auflaufende, und die rechts dargestellte Bremsbacke 3 die ablaufende.

Die Spreizeinrichtung 4 drückt beide Bremsbacken 2, 3 auseinander, wobei die auflaufende Bremsbacke 2 von der Bremstrommel in deren Drehrichtung relativ zur Trägerplatte 1 mitgenommen wird. Die auf sie ausgeübte Reibkraft wird mittels des Stempels 5 auch auf die ablaufende Bremsbacke 3 übertragen, so dass deren Druckkopf 8 sich an dem Widerlager 6 abstützt.

Die Erfindung sieht nun vor, dass dort die Abstützkraft gemessen wird, die ein Maß für die Bremskraft darstellt und damit zur Steuerung der Spreizeinrichtung 4 genutzt werden kann.

Im einfachsten Fall besteht das Widerlager 6 gemäß Fig. 2 dazu aus einem massiven, aber flachen Bauteil, das senkrecht von der Trägerplatte 1 absteht und daran befestigt ist, so dass die Druckköpfe 7, 8 sich an deren in Umfangsrichtung weisenden Kanten abstützen können.

Das Widerlager 6 besteht dabei aus einem Sockel 10, an dem über einen schmalen zentralen Steg 11 eine Basis 12 anschließt, an deren in Umfangsrichtung weisenden Kanten die Druckköpfe 7, 8 der Bremsbacken 2, 3 anlegbar sind. Da die einander zugewandten Kanten von Sockel 10 und Basis 12 in einem geringen Abstand parallel zueinander verlaufen, bilden sich ausgehend vom Steg 11 zwischen dem Sockel 10 und der Basis 12 zwei Messspalte 13, 14.

Bei einer Drehung der Bremstrommel gegen den Uhrzeigersinn gemäß dem dargestellten Pfeil 9 ist die links dargestellte Bremsbacke 2 eine auflaufende und die rechts dargestellte eine ablaufende Bremsbacke 3. Durch die Reibkräfte zwischen den Bremsbacken und der Bremstrommel werden diese, weil diese schwimmend gelagert sind, in Drehrichtung mitgenommen, so dass die ablaufende Bremsbacke 3 sich an der Basis 12 des Widerlagers 6 abstützt und diese gegenüber dem Sockel 10 kippt, wodurch - wie in Fig. 2 gezeigt - der ihr zugewandte Messspalt 14 geweitet und der von ihr abgewandte Messspalt 13 enger wird.

Diese Änderungen können mit geeigneten Sensoren erfasst werden und stellen einen Wert für die eingeleitete Bremskraft dar, die wiederum zur Steuerung der Spreizeinrichtung genutzt werden kann.

Bei einer anderen Drehrichtung vertauschen sich die Funktionen der beiden Bremsbacken 2, 3, die linke wird zur ablaufenden und die rechte zur auflaufenden, so dass sich nun diese an der Basis 12 des Widerlagers 6 abstützt, wodurch der ihr zugewandte linke Messspalt 13 geweitet und der von ihr abgewandte rechte Messspalt 14 verengt wird.

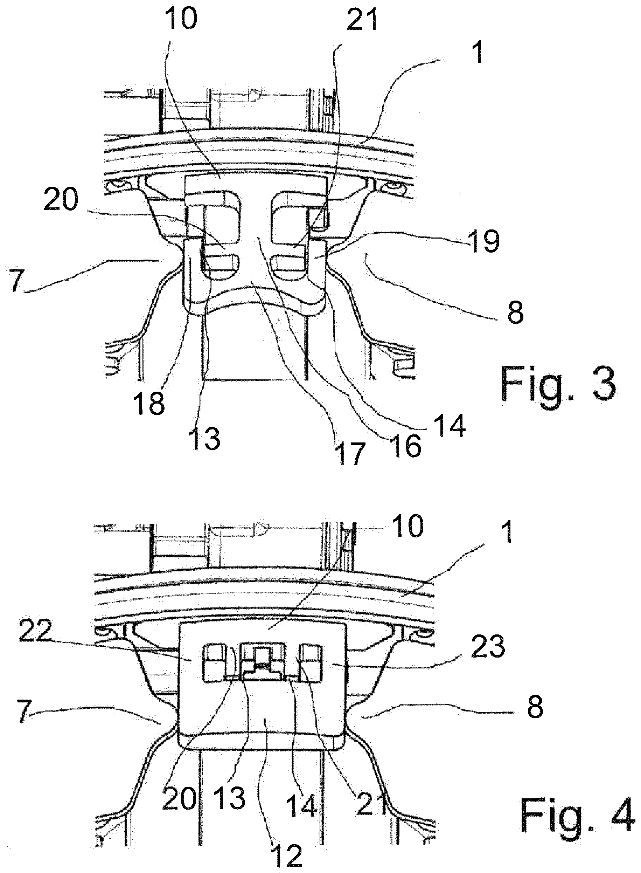

Eine andere Möglichkeit der Ausbildung des Widerlagers ist in der Fig. 3 dargestellt. Aus dem an der Träger-platte 1 befestigten Sockel 10 läuft ein zentraler Steg 16, der in einen Quersteg 17 übergeht, von dessen Enden jeweils ein zum Sockel 10 weisender Arm 18, 19 ausgeht. Der zentrale Steg 16, der Quersteg 17 und die beiden Arme 18, 19 bilden somit ein T. An der in Umfangsrichtung weisenden Außenkante der Arme 18, 19 sind die Druckköpfe 7, 8 der Bremsbacken 2, 3 angelegt.

Von dem zentralen Steg 16 stehen seitlich zwei Stifte 20, 21 ab, die unter Bildung jeweils eines Messspaltes 13, 14 kurz vor den Innenkanten der Arme 18, 19 enden.

Die jeweils auflaufende Bremsbacke 2, 3 verbiegt den Arm 19 bzw. 18, an dem sie abgestützt ist, nach innen, wodurch der zugehörige Messspalt 14 bzw. 13 verkleinert wird, was wiederum messtechnisch erfasst werden kann.

Gleichzeitig dienen die Stifte 20, 21 als Überlastschutz. Sollten die Bremskräfte zu groß werden, stützen sich die Arme 17, 18 an dem zugehörigen Stift 20, 21 ab.

Eine dritte Ausführung gemäß Fig. 4 besteht aus einem Sockel 10 und einer Basis 12, die über zwei randständige Streben 22, 23 miteinander verbunden sind, so dass sie einen Rahmen mit einer zentralen Öffnung bilden. Von der die Öffnung begrenzende Innenkante des Sockels 10 gehen zwei Stifte 20, 21 aus, die bis auf einen Messspalt 13, 14 bis zur Innenkante der Basis 12 reichen.

Bei einer Belastung der Basis 12 in Umfangsrichtung verschiebt sich diese parallel gegenüber dem Sockel 10, so dass der rechteckige Rahmen sich in ein Parallelogramm umformt, wobei sich die Basis 12 dem Sockel 10 und den Enden der Stifte 20, 21 nähert, wodurch die Messspalte 13, 14 entsprechend verkleinert werden.

Für die Messung der Änderung des Messspaltes stehen in allen Ausführungen verschiedene Möglichkeiten zur Verfügung: Es können Sensoren, die den anisotropen magnetoresistiven Effekt (AMR-Effekt) nutzen, oder auch lineare Hall-Sensoren eingesetzt werden.

Unabhängig von der Messung der Messspaltgröße kann die jeweilige Formänderung des Widerlagers mit Dehnmessstreifen erfasst werden.

Die Sensoren erlauben eine Bestimmung des in der Trommelbremse wirkenden Bremsmomentes. Dieses wird zur Steuerung der Bremswirkung der Trommelbremse eingesetzt.

### Bezugszeichenliste

- 1: Trägerplatte
- 2: Bremsbacken
- 3: Bremsbacken
- 4: Spreizeinrichtung
- 5: Stempel
- 6: Widerlager
- 7: Druckkopf
- 8: Druckkopf
- 9: Pfeil
- 10: Sockel
- 11: Steg
- 12: Basis
- 13: Messspalt
- 14: Messspalt

- 16: zentraler Steg
- 17: Quersteg
- 18: Arm
- 19: Arm
- 20: Stift
- 21: Stift
- 22: randständige Strebe
- 23: randständige Strebe

## Patentansprüche

1. Trommelbremse der Servobremsbauart mit einer Bremstrommel und zwei an die Bremstrommel anlegbare, auf der Bremsbackenseite einer Trägerplatte (1) angeordnete Bremsbacken (2, 3), die jeweils ein Druckende und ein Abstützende aufweisen, wobei sich zwischen den Druckenden eine gegenüber der Trägerplatte (1) schwimmend gelagerte Spreizeineinrichtung (4) befindet, die zur Krafteinleitung in die beiden Druckenden in Krafteinleitungspunkten an den Druckenden abgestützt ist, und wobei sich zwischen den Abstützenden ein gegenüber der Trägerplatte (1) schwimmend gelagerter Stempel (5) befindet, der zur Kraftübertragung an den beiden Abstützenden abgestützt ist, wobei jede Bremsbacke (2, 3) an ihrem Druckende neben dem dortigen Krafteinleitungspunkt einen Druckkopf aufweist, wobei beide Druckköpfe (7, 8) an einem zwischen ihnen angeordneten und mit der Trägerplatte (1) verbundenen Widerlager (6) abstützbar sind, **dadurch gekennzeichnet, dass** das Widerlager (6) als Ganzes als ein unter Last elastisch verformbares massives Bauteil ausgeführt ist, und dass ein oder mehrere Sensoren vorgesehen sind, die die sich unter Last einstellende Verformung des Widerlagers (6) erfassen, wobei mittels des Sensorsignals das in der Trommelbremse erzeugte Bremsmoment bestimmt wird.

2. Trommelbremse nach Anspruch 1, **dadurch gekennzeichnet, dass** das Widerlager (6) von einer Basis gebildet ist, die über einen Steg (11) an einen mit der Trägerplatte (1) fest verbundenen Sockel (10) anschließt, wobei die Druckköpfe (7, 8) an den gegenüberliegenden Kanten der Basis (12) anliegen.

3. Trommelbremse nach Anspruch 2, **dadurch gekennzeichnet, dass** die Basis (12) über einen zentralen Steg (16) mit dem Sockel (10) verbunden ist, wobei die einander zugewandten Kanten von Basis (12) und Sockel (10) parallel zueinander verlaufen und zwischen sich einen Messspalt einschließen.

4. Trommelbremse nach Anspruch 2, **dadurch gekennzeichnet, dass** das Widerlager (6) eine U-förmige Gestalt hat mit einer Basis (12) und zwei von der Basis abstehende Arme (18, 19), an deren Außenkanten die Druckköpfe (7, 8) abgestützt sind, und dass der oder die Sensoren von der Art sind, mit der sich die unter der Last verändernde Neigung der Arme (18, 19) erfasst wird.

5. Trommelbremse nach Anspruch 4, **dadurch gekennzeichnet, dass** die Basis (12) von einem an der Trägerplatte (1) befestigten Sockel ausgehenden zentralen Steg (20) getragen wird, der an die Innenkante der Basis (10) anschließt, so dass die Arme (11, 12) zur Trägerplatte (1) gerichtet sind.

6. Trommelbremse nach Anspruch 4 oder 5, **dadurch gekennzeichnet, dass** seitlich vom zentralen Steg (16) abstehende Stifte (20, 21) an die Innenkanten der Arme (18, 19) unter Bildung eines Messspaltes heranreichen.

7. Trommelbremse nach Anspruch 5, **dadurch gekennzeichnet, dass** die Basis und der Sockel über zwei randständige Streben (22, 23) miteinander zu einem Rahmen verbunden sind, wobei wenigstens ein Stift ausgehend vom Sockel zur Innenkante der Basis (12) zur Bildung eines Messspaltes reicht.

8. Trommelbremse nach Anspruch 5, **dadurch gekennzeichnet, dass** der Sockel (10), die Stege (20) und die Basis (12) ein einstückiges Bauteil bilden.

9. Trommelbremse nach einem der vorhergehenden Ansprüche, **dadurch gekennzeichnet, dass** zur Erfassung der Verformung des Widerlagers (6) an diesem Dehnmessstreifen angebracht sind.

10. Trommelbremse nach einem der vorhergehenden Ansprüche 1 bis 8, **dadurch gekennzeichnet, dass** zur Erfassung der Verformung des Widerlagers (6) Sensoren, die auf den anisotropen magnetoresistiven Effekt oder den Hall Effekt beruhen, vorgesehen sind.

## Claims

1. Drum brake of servo brake design with a brake drum and two brake shoes (2, 3) which can be applied to the brake drum, are arranged on the brake shoe side of a carrier plate (1) and each have a pressure end and a supporting end, a spreading device (4) which is mounted in a floating manner with respect to the carrier plate (1) and is supported at the pressure ends for the introduction of force into the two pressure ends at force introduction points, and a plunger (5) which is mounted in a floating manner with respect to the carrier plate (1) and is supported at the two supporting ends for the transmission of force being situated between the pressure ends, each brake shoe (2, 3) having, at its pressure end, a pressure head in addition to the force introduction point there, it being possible for the two pressure heads (7, 8) to be supported on an abutment (6) which is arranged between them and is connected to the carrier plate (1), **characterized in that** the abutment (6) is configured in its entirety as a solid component which is elastically deformable under load, and **in that** one or more sensors are provided which detect the deformation of the abutment (6) which is produced under load, the brake torque which is generated in the drum brake being determined by means of the sensor signal.

2. Drum brake according to Claim 1, **characterized in that** the abutment (6) is formed by a base which, via a web (11), adjoins a pedestal (10) which is connected fixedly to the carrier plate (1), the pressure heads (7, 8) bearing against the opposite edges of the base (12).

3. Drum brake according to Claim 2, **characterized in that** the base (12) is connected via a central web (16) to the pedestal (10), those edges of the base (12) and the pedestal (10) which face one another running parallel to one another and enclosing a measuring gap between them.

4. Drum brake according to Claim 2, **characterized in that** the abutment (6) has a U-shaped design with a base (12) and two arms (18, 19) which project from the base and on the outer edges of which the pressure heads (7, 8) are supported, and **in that** the sensor or sensors is/are of the type, by way of which the inclination, changing under the load, of the arms (18, 19) is detected.

5. Drum brake according to Claim 4, **characterized in that** the base (12) is supported by a central web (20) which emanates from a pedestal fastened to the carrier plate (1) and adjoins the inner edge of the base (10), with the result that the arms (11, 12) are directed towards the carrier plate (1).

6. Drum brake according to Claim 4 or 5, **characterized in that** pins (20, 21) which project from the central web (16) reach up to the inner edges of the arms (18, 19) with the formation of a measuring gap.

7. Drum brake according to Claim 5, **characterized in that** the base and the pedestal are connected to one another via two struts (22, 23) at the edge to form a frame, at least one pin reaching, starting from the pedestal, to the inner edge of the base (12) in order to form a measuring gap.

8. Drum brake according to Claim 5, **characterized in that** the pedestal (10), the webs (20) and the base (12) form a single-piece component.

9. Drum brake according to one of the preceding claims, **characterized in that** strain gauges are attached to the abutment (6) for the detection of the deformation of the latter.

10. Drum brake according to one of the preceding Claims 1 to 8, **characterized in that** sensors which are based on the anisotropic magnetoresistive effect or the Hall effect are provided for the detection of the deformation of the abutment (6).

## Revendications

1. Frein à tambour du type servofrein comprenant un tambour de frein et deux mâchoires de frein (2, 3) qui peuvent être placées sur le tambour de frein, qui sont disposées du côté des mâchoires de frein d'une plaque de support (1) et qui comportent chacune une extrémité de pression et une extrémité de support, un dispositif d'écartement (4), qui est monté de manière flottante par rapport à la plaque de support (1) et qui s'appuie sur des points d'application de force sur les extrémités de pression pour appliquer une force dans les deux extrémités de pression, étant situé entre les extrémités de pression et un piston (5), qui est monté de manière flottante par rapport à la plaque de support (1) et qui s'appuie sur les deux extrémités de support afin de transmettre la force, étant situé entre les extrémités de support, chaque mâchoire de frein (2, 3) comportant une tête de pression à son extrémité de pression à côté du point d'application de force à cet endroit, les deux têtes de pression (7, 8) pouvant s'appuyer sur une butée (6) disposée entre elles et reliée à la plaque de support (1), **caractérisé en ce que** la butée (6) est conçue dans son ensemble comme un composant solide qui peut être déformé élastiquement sous une charge, et
un ou plusieurs capteurs sont prévus qui détectent la déformation de la butée (6) qui se produit sous une charge, le couple de freinage généré dans le frein à tambour étant déterminé au moyen du signal des capteurs.

2. Frein à tambour selon la revendication 1, **caractérisé en ce que** la butée (6) est formée par une base qui se raccorde par le biais d'une nervure (11) à une embase (10) qui est reliée de manière fixe à la plaque de support (1), les têtes de pression (7, 8) venant en appui sur des bords opposés de la base (12).

3. Frein à tambour selon la revendication 2, **caractérisé en ce que** la base (12) est reliée à l'embase (10) par le biais d'une nervure centrale (16),
les bords, dirigés l'un vers l'autre, de la base (12) et de l'embase (10) étant parallèles l'un à l'autre et formant entre eux un espace de mesure.

4. Frein à tambour selon la revendication 2, **caractérisé en ce que** la butée (6) a une forme de U comprenant une base (12) et deux bras (18, 19) qui s'étendent depuis la base et sur les bords extérieurs desquels les têtes de pression (7, 8) s'appuient et **en ce que** le ou les capteurs sont du type permettant de détecter l'inclinaison des bras (18, 19) qui varie sous la charge.

5. Frein à tambour selon la revendication 4, **caractérisé en ce que** la base (12) est supportée par une nervure centrale (20) qui s'étend depuis une embase fixée à la plaque de support (1) et qui se raccorde au bord intérieur de la base (10) de sorte que les bras (11, 12) soient dirigés vers la plaque de support (1).

6. Frein à tambour selon la revendication 4 ou 5, **caractérisé en ce que** des tiges (20, 21) qui s'étendent latéralement depuis la nervure centrale (16) atteignent les bords intérieurs des bras (18, 19) en formant un espace de mesure.

7. Frein à tambour selon la revendication 5, **caractérisé en ce que** la base et l'embase sont reliées l'une à l'autre par le biais de deux entretoises de bord (22, 23) pour former un cadre, au moins une tige s'étendant de l'embase jusqu'au bord intérieur de la base (12) pour former un espace de mesure.

8. Frein à tambour selon la revendication 5, **caractérisé en ce que** l'embase (10), les nervures (20) et la base (12) forment un composant monobloc.

9. Frein à tambour selon l'une des revendications précédentes, **caractérisé en ce que** des jauges de contrainte sont fixées à la butée (6) afin de détecter la déformation de celle-ci.

10. Frein à tambour selon l'une des revendications précédentes 1 à 8, **caractérisé en ce que** des capteurs, qui reposent sur l'effet magnéto-résistif anisotrope ou sur l'effet Hall, sont prévus pour détecter la déformation de la butée (6).
